# EUROPÄISCHE PATENTSCHRIFT

(11) **EP 3 740 400 B1**
(45) Veröffentlichungstag und Bekanntmachung des Hinweises auf die Patenterteilung: **23.09.2026**
(21) Anmeldenummer: 18833391.8
(22) Anmeldetag: 13.12.2018
(51) Int. Cl.: B60Q 1/26, B60Q 9/00, B60Q 1/50, B60Q 1/46, G01S 13/931, G05D 1/00, G01S 7/06, G01S 13/87, G01S 7/02, G01S 13/93, B60Q 1/00, F21S 41/141, G08G 1/16

(54) **MOBILTEIL MIT ZUMINDEST EINEM MODUL UND VERFAHREN ZUM BETREIBEN EINES MOBILTEILS**
MOBILE PART COMPRISING AT LEAST ONE MODULE AND METHOD FOR OPERATING A MOBILE PART
ÉLÉMENT MOBILE DOTÉ D'AU MOINS UN MODULE ET PROCÉDÉ POUR FAIRE FONCTIONNER UN ÉLÉMENT MOBILE

(30) Priorität: 18.01.2018 DE 102018000366
(43) Veröffentlichungstag der Anmeldung: 25.11.2020
(73) Patentinhaber: SEW-EURODRIVE GmbH & Co. KG, 76646 Bruchsal (DE)
(72) Erfinder: AYHAN, Serdal, 69234 Dielheim (DE); SCHÄFER, Thomas, 76689 Karlsdorf-Neuthard (DE)
(86) Internationale Anmeldenummer: PCT/EP2018/025320
(87) Internationale Veröffentlichungsnummer: WO 2019/141340

(56) Entgegenhaltungen:
- EP-A1- 3 267 098
- EP-A1- 3 267 098
- WO-A1-01/98708
- WO-A1-01/98708
- WO-A1-2014/114430
- WO-A1-2014/114430
- WO-A1-2015/090656
- WO-A1-2015/090656
- WO-A1-2015/180978
- WO-A1-2015/180978
- CN-A- 107 458 300
- CN-A- 107 458 300
- DE-A1- 102007 042 625
- DE-A1- 102011 108 579
- DE-A1- 102011 108 579
- US-A1- 2013 226 344
- US-A1- 2013 226 344
- US-A1- 2015 091 471
- US-A1- 2017 080 850
- US-A1- 2017 080 850
- US-A1- 2017 082 751
- US-A1- 2017 082 751
- US-A1- 2017 120 803
- US-A1- 2017 120 803
- US-A1- 2018 339 645
- US-A1- 2018 339 645
- "HUSQVARNA AUTOMOWER 230 ACX / 220 AC OPERATOR'S MANUAL", 11 May 2010 (2010-05-11), pages 1 - 78, XP055258716, Retrieved from the Internet <URL:http://service.webec.husqvarna.net/documents/HUSO/HUSO2010_EUenAPen/HUSO2010_EUenAPen__1152762-26.pdf> [retrieved on 20160316]
- "HUSQVARNA AUTOMOWER 230 ACX / 220 AC OPERATOR'S MANUAL", 11 May 2010 (2010-05-11), pages 1 - 78, XP055258716, Retrieved from the Internet <URL:http://service.webec.husqvarna.net/documents/HUSO/HUSO2010_EUenAPen/HUSO2010_EUenAPen__1152762-26.pdf> [retrieved on 20160316]

## Beschreibung

Die Erfindung betrifft ein Mobilteil mit zumindest einem Modul und ein Verfahren zum Betreiben eines Mobilteils.

Es ist allgemein bekannt, ein Mobilteil auf einer Verfahrfläche bewegbar anzuordnen.

Aus der US 2005 / 0 013 140 A1 ist hierzu ein Fahrzeug mit seitlichen Leuchten bekannt.

Aus der US 5 023 790 A ist ein automatische geführtes Mobilteil bekannt.

Aus der DE 10 2011 109 532 A1 ist ein Verfahren zum Betreiben einer Anlage mit Mobilteil bekannt, dass Energie an eine Maschine überträgt.

Aus der DE 10 2013 215 409 A1 ist eine Projektionseinheit für ein Mobilteil bekannt.

Aus der DE 10 2011 110 196 A1 ist ein Mobilteil mit Antrieb bekannt.

Aus der US 2017/080850 A1 Lichsteuerungssystem für autonom fahrende Fahrzeuge bekannt.

Aus der CN 107 458 300 A ist ein Beleuchtungssystem bei Personenkraftwagen bekannt.

Aus der WO 01/98708 A1 ist ein flexibles substrat-montiertes Festkörperlicht für Fahrzeuge bekannt.

Aus der EP 3 267 098 A1 ist eine Fahrzeugleuchte bekannt.

Aus der DE 10 2011 108579 A1 ist eine Anlage mit Mobilteilen bekannt.

Aus der WO 2014/114430 A1 ist ein System mit Fahrzeugen bekannt.

Aus der WO 2015 / 180978 A1 sind LEDs bekannt, die auf einer gekrümmten Gehäuseoberfläche montiert sind.

Aus der US 2017/082751 A1 ist eine Anordnung zur Detektion von Hindernissen in einer horizontalen Ebene bekannt.

Aus der Veröffentlichung XP 055258716 ist ein autonom navigierendes Mobilteil bekannt.

Aus der US 2013/226344 A1 ist ein mobiler Roboter bekannt.

Aus der WO 2015/090656 A1 ist eine Radarvorrichtung mit einer Fahrzeugleuchte bekannt.

Aus der US 2017/120803 A1 ist ein System zur Konfiguration einer aktiven Beleuchtung bekannt, um die Richtungsanzeige eines autonom fahrenden Fahrzeugs anzuzeigen.

Der Erfindung liegt daher die Aufgabe zugrunde, ein Mobilteil weiterzubilden, wobei bei geringem Zusatzaufwand die Sicherheit erhöht sein soll.

Erfindungsgemäß wird die Aufgabe bei dem Mobilteil nach den in Anspruch 1 angegebenen Merkmalen gelöst.

Von Vorteil ist dabei, dass das Leuchtmittel in einem Modul angeordnet ist. Somit sind in dem Modul auch Radarsensoren und ein weiteres Leuchtmittel anordenbar, wobei das weitere Leuchtmittel aus dem Innenraumbereich des Moduls durch Schlitze hindurch die Verfahrfläche beleuchtet. Mittels der Sensoren ist der Abstand zu einem Objekt detektierbar und somit mittels einer auf dem Mobilteil angeordneten Steuerung das Leuchtmittel steuerbar, insbesondere abhängig vom Abstand zu dem detektierten Objekt.

Vorzugsweise ist das Modul schraubverbunden mit dem restlichen Mobilteil, insbesondere also einem Gestell des Mobilteils. Weiter vorzugsweise ist eine Steckverbindung, aufweisend Steckverbinderteil und Gegensteckverbinderteil, zur elektrischen Verbindung des Moduls mit dem restlichen Mobilteil, insbesondere seiner Steuerung, vorhanden. Insbesondere ist das Steckverbinderteil am Modul und das Gegensteckverbinderteil am restlichen Mobilteil, insbesondere am Gestell des Mobilteils, angeordnet

Die Sensorsignale der Sensoren werden also über die Steckverbindung einer Steuerung des Mobilteils zugeleitet, insbesondere welche am Gestell des Mobilteils befestigt ist. Diese Steuerung bestimmt daraus Ansteuersignale zur Steuerung des Leuchtmittels.

Auf diese Weise ist die Farbe, der Farbton und/oder die Blinkfrequenz des vom Leuchtmittel ausgestrahlten Lichts steuerbar. Dabei ist die Blinkfrequenz die Frequenz des Blinkens, also Einschaltens mit nachfolgendem Ausschalten.

Gleichartige Module sind an vier Außenecken des Mobilteils anordenbar, so dass eine Rundumüberwachung mittels der Sensoren und ebenso eine Rundum sichtbare Signalisierung, insbesondere Anzeige, mittels der jeweiligen Leuchtmittel der Module ermöglicht ist. Dabei bezieht sich die Rundumüberwachung auf eine zur Verfahrfläche der Anlage parallele Ebene, welche beabstandet ist von der Verfahrfläche und zumindest einen Punkt des Moduls enthält beziehungsweise durch die Radarsensoren und/oder durch das Leuchtmittel hindurchgeht. Die Umfangswinkel sind dabei jeweils bezogen auf eine Richtung in dieser Ebene, beispielsweise die Fahrtrichtung des Mobilteils oder eine zu einer Radachse parallel Richtung.

Bei einer vorteilhaften Ausgestaltung ist das Modul derart am Mobilteil angeordnet, insbesondere schraubverbunden, dass die von der auf die Verfahrfläche senkrecht ausgeführte Projektion des Mobilteils das Modul an seiner äußeren Umrandung aufweist, insbesondere an einem Eckbereich der Projektion. Von Vorteil ist dabei, dass das Modul an einer Außenecke des Mobilteils anbringbar ist und somit eine Rundum-Überwachung und - Signalisierung in einfacher Weise ermöglicht ist. Insbesondere steht das Außeneck etwas hervor, so dass eine ungestörte Überwachung des empfindlichen Bereiches des Radarsensors des Moduls ermöglicht ist.

Bei einer vorteilhaften Ausgestaltung ist das Modul mit einem Gestell des Mobilteils schraubverbunden, insbesondere wobei das Modul mittels einer Steckverbindung elektrisch versorgt, ist aus einem Energiespeicher des Mobilteils. Von Vorteil ist dabei, dass eine einfach bedienbare lösbare mechanische und elektrische Schnittstelle erreichbar ist.

Erfindungsgemäß weist die Oberfläche des Moduls einen konvexen Bereich auf, welcher zwischen zwei voneinander beabstandeten konkaven Bereichen, insbesondere Vertiefungen, angeordnet ist. Von Vorteil ist dabei, dass ein vom Modul ein nach außen hervorstehendem Bereich gebildet ist, an welchem das Leuchtmittel somit in einen vergrößerten Umfangswinkelbereich Lichtstrahlung eintragen kann.

Erfindungsgemäß ist an der Oberfläche des Moduls das Leuchtmittel angeordnet,
wobei das Leuchtmittel langgestreckt entlang einer ebenen Kurve, nämlich einer Linie, ausgeführt ist,
wobei die Linie parallel beabstandet zur Verfahrfläche und/oder zu derjenigen Ebene, welche die Drehachsen der Räder des Mobilteils enthält, ausgerichtet ist,
wobei ein erster Bereich des Leuchtmittels und/oder der Kurve im konvexen Bereich angeordnet ist,
wobei ein zweiter Bereich des Leuchtmittels und/oder der Kurve in einem der konkaven Bereiche angeordnet ist,
wobei ein dritter Bereich des Leuchtmittels und/oder der Kurve in einem der konkaven Bereiche angeordnet ist. Von Vorteil ist dabei, dass das Leuchtmittel bandartig ausführbar ist und somit einen langgestreckten Oberflächenbereich des Moduls belegt. Auf diese Weise ist vom konvexen Bereich aus ein großer Umfangswinkelbereich bestrahlbar mit Licht. Die konkaven Bereiche bewirken, dass das Leuchtmittel auch von hier aus in eine Umfangsrichtung strahlen kann, welche schon vom konvexen Bereich aus bestrahlt ist.

Bei einer vorteilhaften Ausgestaltung ist das Modul an einem Außeneckbereich eines Gestells des Mobilteils angeordnet. Von Vorteil ist dabei, dass eine einfache Rundumüberwachung erreichbar ist, wenn weitere Module auch an weiteren Außeneckbereichen des Mobilteils angeordnet sind. Dabei sind die Außeneckbereiche vorzugsweise jeweils die vom Schwerpunkt des Mobilteils am weitesten entfernte Bereiche.

Bei einer vorteilhaften Ausgestaltung fungiert das Modul als gerundeter Außeneckbereich der auf die Verfahrfläche senkrechten Projektion des Mobilteils samt Modul. Von Vorteil ist dabei, dass eine einfache Rundumüberwachung erreichbar ist, wenn weitere Module auch an weiteren Außeneckbereichen des Mobilteils angeordnet sind. Dabei sind die Außeneckbereiche vorzugsweise jeweils die vom Schwerpunkt des Mobilteils am weitesten entfernte Bereiche.

Bei einer vorteilhaften Ausgestaltung sind zum Modul gleichartig, identisch, ausgebildete, weitere Module am Mobilteil angeordnet,
- welche jeweils an einem Außeneckbereich eines Gestells des Mobilteils angeordnet sind
- und/oder welche jeweils das Modul als jeweiliger gerundeter Außeneckbereich der auf die Verfahrfläche senkrechten Projektion des Mobilteils samt Modul fungieren.

Von Vorteil ist dabei, dass eine einfache Rundumüberwachung erreichbar ist, wenn die weiteren Module auch an weiteren Außeneckbereichen des Mobilteils angeordnet sind. Dabei sind die Außeneckbereiche vorzugsweise jeweils die vom Schwerpunkt des Mobilteils am weitesten entfernte Bereiche.

Bei einer vorteilhaften Ausgestaltung weist das oder jedes Modul zumindest einen Radarsensor auf,
insbesondere welcher einen jeweiligen Raumbereich überwacht und/oder mit welchem der Abstand von Objekten zum Radarsensor bestimmbar ist. Von Vorteil ist dabei, dass eine Abstandsbestimmung zu einem jeweiligen Objekt ermöglicht ist.

Bei einer vorteilhaften Ausgestaltung sind die weiteren Module derart angeordnet, dass das Mobilteil eine Rundumüberwachung aufweist und/oder dass mittels der Radarsensoren der bezogen auf einen im Mobilteil angeordnete Mittelpunkt gesamte Umfangswinkelbereich in einer zur Verfahrfläche parallelen Ebene überwachbar ist. Von Vorteil ist dabei, dass eine erhöhte Sicherheit erreichbar ist.

Bei einer vorteilhaften Ausgestaltung sind die konkaven Bereiche als Vertiefungen an der Oberfläche des Moduls ausgeführt,
insbesondere wobei die Vertiefungen auf eine Ebene bezogen sind, welche parallel zur Verfahrfläche ausgerichtet ist. Von Vorteil ist dabei, dass die Vertiefungen einfach herstellbar sind.

Bei einer vorteilhaften Ausgestaltung weist das Gehäuse des Moduls durchgehende Schlitze auf,
insbesondere wobei die Schlitze parallel zur Verfahrfläche ausgerichtet sind. Von Vorteil ist dabei, dass die Verfahrfläche beleuchtbar ist durch ein weiteres Leuchtmittel, welches im Innenraum des Moduls angeordnet ist.

Bei einer vorteilhaften Ausgestaltung ist im vom Gehäuse des Moduls umgebenen Innenraumbereich des Moduls ein weiteres Leuchtmittel angeordnet,
insbesondere so, dass das vom weiteren Leuchtmittel erzeugte Licht mittels der Schlitze zur Verfahrfläche hingerichtet austritt. Von Vorteil ist dabei, dass eine Beleuchtung in einfacher Weise erreichbar ist.

Wichtige Merkmale bei dem Verfahren sind, dass es zum Betreiben des Mobilteils vorgesehen ist, wobei der Farbton, die Farbe und/oder eine Blinkfrequenz des von einem Leuchtmittel des Mobilteils ausgestrahlten Lichtes in Abhängigkeit vom erfassten Abstand eines Objekts zum Mobilteil gesteuert wird. Von Vorteil ist dabei, dass eine Anzeige des Abstands und somit die Höhe des Kollisionsrisikos anzeigbar ist.

Insbesondere wird zur Datenübertragung das Leuchtmittel mit einer Taktfrequenz angesteuert wird, die höher ist als 500 Hertz. Somit ist diese Modulation des emittierten sichtbaren Lichts mit den menschlichen Augen nicht erkennbar.

Insbesondere beträgt die Blinkfrequenz weniger als 10 Hertz, womit sie mit einem menschlichen Auge wahrnehmbar ist.

Vorzugsweise wird die Taktfrequenz bei abnehmender Blinkfrequenz entsprechend, insbesondere proportional, erhöht. Somit ist noch die selbe durchschnittliche Datenrate aufrechterhaltbar, wenn der Sicherheitsfall eintritt, also ein Objekt nahekommt.

Bei einer vorteilhaften Ausgestaltung wird der Farbton von Rot über Orange und dann über Gelb nach Grün gesteuert, wenn der Abstand sich verringert von einem ersten Wert zu einem zweiten Wert. Von Vorteil ist dabei, dass der Abstand farbcodiert, anzeigbar ist. Zusätzlich und/oder alternativ ist die Anzahl von LEDs abhängig vom Abstand steuerbar.

Wichtige Merkmale bei der Anlage sind, dass die Anlage mit der Verfahrfläche und dem Mobilteil vorgesehen ist, wobei die Verfahrfläche eine Ebene ist. Von Vorteil ist dabei, dass das Fahrzeug mit geringem Energieaufwand bewegbar ist. Vorteiligerweise ist die Ebene eine Horizontalebene, so dass das Mobilteil mit geringem Energieaufwand von seinem von seiner Steuerung angesteuerten Antrieb bewegbar ist, insbesondere in der durch eine von seiner Steuerung angesteuerten Lenkeinheit bewirkten Fahrtrichtung, insbesondere welche einem Lenkwinkel entspricht.

Weitere Vorteile ergeben sich aus den Unteransprüchen.

Die Erfindung wird nun anhand von schematischen Abbildungen näher erläutert:

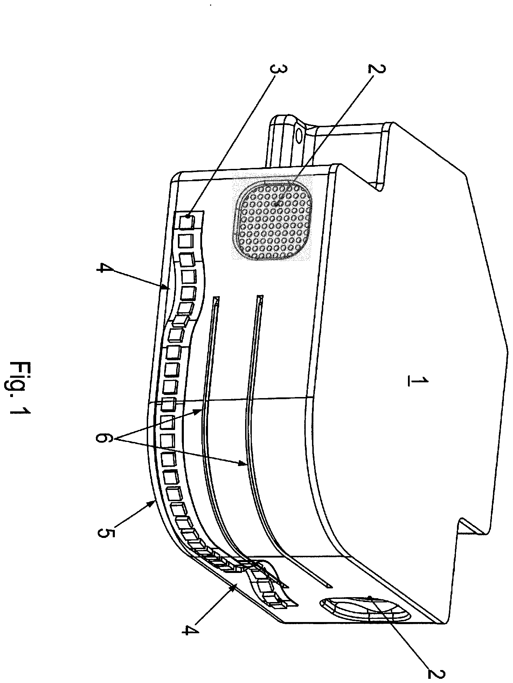

In der Figur 1 ist ein Modul 1 gezeigt, das an einem erfindungsgemäßen Mobilteil angeordnet ist.

Das Mobilteil ist als Fahrzeug ausgeführt, welches Räder und eine Lenkeinheit aufweisen.

Das Mobilteil ist auf einer Verfahrfläche einer Anlage, wie Lager, Hochregallager, Fertigungswerk oder dergleichen, bewegbar angeordnet. Dabei sind Räder drehbar am Gestell des Mobilteils gelagert, insbesondere sind hierzu Lenkrolleneinheiten vorgesehen, welche jeweils zumindest ein drehbar gelagertes Rad, insbesondere Rolle, aufweisen. Dabei ist die jeweilige Lenkrolleneinheit selbst wiederum drehbar um eine jeweilige Drehachse am Gestell gelagert, die jeweils in Normalenrichtung zur Verfahrebene des Mobilteils ausgerichtet ist. Dagegen ist die Drehachse jedes Rads hierzu senkrecht ausgerichtet, also parallel zur Verfahrebene. Die Gewichtskraft des Mobilteils und der von ihm aufgenommenen Last wird zum größten Teil über die Räder an die Verfahrfläche übertragen.

Vorzugsweise weist die Lenkeinheit eine Antriebseinheit auf, welche am Gestell des Mobilteils drehbar um eine erste Drehachse angeordnet ist. Die erste Drehachse ist wiederum parallel zur Normalenrichtung der Verfahrebene ausgerichtet.

Die Antriebseinheit weist einen Elektromotor auf, welcher direkt oder über ein Getriebe, also indirekt, Räder der Antriebseinheit antreibt. Da die Antriebseinheit nur mittels eines Federelements vom Gestell gegen die Verfahrfläche gedrückt wird, ist die Gewichtskraft des Gestells samt der auf dem Gestell aufgenommenen Last im Wesentlichen über die am Gestell drehbar gelagerten Räder, insbesondere also über die Lenkrolleneinheit, an die Verfahrfläche ableitbar. Die Lenkeinheit hingegen wird nur von ihrer eigenen Gewichtskraft und der vom Federelement erzeugten Kraft gegen die Verfahrfläche gedrückt.

Somit werden die Räder der Antriebseinheit mit einer von der aufgenommenen Last unabhängigen Kraft an die Verfahrfläche angedrückt.

Die auf die Verfahrfläche senkrecht projizierte Projektionsfläche des Mobilteils weist einen rechteckförmigen Umriss mit abgerundeten Eckbereichen auf.

Insbesondere an einem jeweiligen Außeneckbereich des Mobilteils ist jeweils ein Modul 1 angeordnet, das ein Leuchtmittel 3 aufweist, welches entlang einer auf der Oberfläche des Moduls 1 verlaufenden Linie angeordnet ist. Die Linie ist in einer Ebene angeordnet, welche parallel zur Verfahrfläche ausgerichtet ist. Dabei weist die Linie konkave Bereiche auf, zwischen denen ein konvexer Bereich angeordnet ist. Somit verläuft die Linie schlangenartig. Auf diese Weise leuchtet das Leuchtmittel 3 in möglichst viele Winkelrichtungen und erreicht dabei eine möglichst gleichmäßige Ausleuchtung in dem gesamten von ihm überdeckten Umfangswinkelbereich. Denn infolge der konkaven Wölbung leuchtet das Leuchtmittel 3 auch in einem vom konvexen Bereich beabstandeten Bereich in den vom konvexen Bereich bestrahlten Raumbereich. Im Gegensatz zu einer bloß abgerundeten Ecke, also einem bloßen konvexen Bereich, wird bei dem erfindungsgemäßen Leuchtmittel 3 der vom konvexen Bereich beleuchtete Raumbereich auch noch von weiteren Bereichen beleuchtet, die jeweils vom konvexen Bereich beabstandet sind.

Die Linie ist vorzugsweise am unteren Endbereich, also an dem der Verfahrfläche zugewandten Endbereich des Moduls, angeordnet.

Außerdem sind auf der vom Leuchtmittel 3 abgewandten Seite Sensoren 2 angeordnet, welche vorzugsweise als Radarsensoren ausgebildet sind.

Die Radarsensoren fungieren als Abstandssensoren zur Erkennung von Hindernissen oder sich nähernden Objekten. Auf diese Weise ist es der Steuerung des Mobilteils ermöglicht, bei Kollisionsgefahr die Fahrgeschwindigkeit zu verringern, insbesondere die Fahrbewegung zu stoppen.

Das Leuchtmittel 3 besteht vorzugsweise aus entlang der Linie vorzugsweise regelmäßig voneinander beabstandeten Lichtquellen. Als Lichtquellen werden vorzugsweise steuerbare Lichtquellen, wie LED, verwendet. Insbesondere ist das Leuchtmittel 3 als LED-Band ausgeführt, insbesondere wobei LEDs in Bandrichtung aufgereiht angeordnet sind. Die Farbe und/oder Intensität, insbesondere Leuchtstärke, des von dem Leuchtmittel 3 ausgestrahlten Lichts ist steuerbar, insbesondere von der Steuerung des Mobilteils. Somit ist die Entfernung eines von zumindest einem der Radarsensoren farbcodiert und/oder intensitätscodiert anzeigbar.

Da an allen Außenecken, insbesondere an allen vier Außenecken, des Mobilteils jeweils ein Modul 1 angeordnet ist, ist eine Rundumüberwachung, insbesondere parallel zur Verfahrebene ermöglicht.

Beispielsweise strahlt das Leuchtmittel 3 bei immer mehr abnehmender Entfernung zum detektierten Objekt Licht einem von grün über gelb und dann orange und dann rot übergehenden Farbton aus. Beispielsweise wird bei einem Abstand von 1 Meter der grüne Farbton verwendet und bei geringeren Abständen ein Gelb beziehungsweise ein Orange und bei einem verschwindenden Abstand Rot.

Zusätzlich ist auch ein blinkender Betrieb des Leuchtmittels 3 ausführbar, wobei die Blinkfrequenz vom jeweils detektierten Abstand abhängt.

Das Modul 1 weist zwei zueinander parallel verlaufende, durch das Gehäuse des Moduls 1 durchgehende Schlitze 6 auf, die parallel zur Verfahrfläche und zum Leuchtmittel 3 verlaufen.

Somit ist im vom Gehäuse des Moduls umgebenen Innenraumbereich des Moduls 1 ein weiteres Leuchtmittel anordenbar, dessen ausgestrahltes Licht durch die Schlitze 6 herausdringt in die Umgebung und dort zur Beleuchtung oder Anzeige von Status oder Information verwendbar ist. Vorzugswiese wird dabei der dem Mobilteil benachbarte Bereich der Verfahrfläche beleuchtet.

Die konkaven Bereiche sind in parallel zur Verfahrfläche gerichtet als Vertiefungen 4 am Modul ausgeführt.

Bei weiteren erfindungsgemäßen Ausführungsbeispielen wird eine Anzahl von LEDs des Leuchtmittels 3 mit rotem Farbton angesteuert, wobei die Anzahl vom Abstand des detektierten Objekts abhängt. Die restlichen LEDs des Leuchtmittels 3 sind entweder grün oder werden nicht angesteuert. Vorzugsweise ist die die Anzahl der rot angesteuerten LEDs proportional zum Abstand. Alternativ nimmt die Anzahl mit abnehmendem Abstand zu und erreicht bei einem Mindestwert ihr Maximum. Zusätzlich ist dann auch der Farbton ins Rote verschoben, so dass beim Mindestwert, insbesondere bei verschwindendem Abstand die maximale Anzahl von rot leuchtenden LEDs vorgesehen ist.

### Bezugszeichenliste

1 Modul
2 Sensor
3 Leuchtmittel
4 Vertiefung
5 gerundeter Eckbereich
6 Schlitz

## Patentansprüche

1. Mobilteil mit zumindest einem Modul (1),
wobei das Mobilteil auf einer Verfahrfläche verfahrbar ist,
wobei das Modul (1) ein steuerbares Leuchtmittel (3), nämlich LED-Band, aufweist,
wobei das Leuchtmittel (3) entlang einer ebenen Kurve langgestreckt angeordnet ist,
wobei das Leuchtmittel (3) entlang der Kurve voneinander regelmäßig beabstandet angeordnete LEDs aufweist,
wobei die Oberfläche des Moduls (1) einen konvexen Bereich aufweist,
wobei an der Oberfläche des Moduls (1), das Leuchtmittel (3) angeordnet ist,
wobei das Leuchtmittel (3) langgestreckt entlang der ebenen Kurve, nämlich einer Linie, ausgeführt ist,
wobei die Linie parallel beabstandet zur Verfahrfläche und/oder zu derjenigen Ebene, welche die Drehachsen von Rädern des Mobilteils enthält, ausgerichtet ist,
wobei die Gewichtskraft des Mobilteils und einer von ihm aufgenommenen Last zum größten Teil über die Räder an die Verfahrfläche übertragen wird,
wobei ein erster Bereich des Leuchtmittels (3) im konvexen Bereich angeordnet ist, **dadurch gekennzeichnet, dass**
der konvexe Bereich zwischen zwei voneinander beabstandeten konkaven Bereichen, insbesondere Vertiefungen (4), angeordnet ist,
wobei ein zweiter Bereich des Leuchtmittels (3) in einem der konkaven Bereiche angeordnet ist,
wobei ein dritter Bereich des Leuchtmittels (3) in einem weiteren der konkaven Bereiche angeordnet ist,
sodass das Leuchtmittel in möglichst viele Winkelrichtungen leuchtet, und dabei eine möglichst gleichmäßige Ausleuchtung in dem gesamten von ihm überdeckten Umfangswinkelbereich erreicht, wobei infolge der konkaven Bereiche das Leuchtmittel auch in einem von dem konvexen Bereich beabstandeten Bereich, in den vom konvexen Bereich bestrahlten Raumbereich leuchtet.

2. Mobilteil nach Anspruch 1,
**dadurch gekennzeichnet, dass**
das Modul (1) derart am Mobilteil angeordnet, insbesondere schraubverbunden ist, dass die von der auf die Verfahrfläche senkrecht ausgeführte Projektion des Mobilteils das Modul (1) an seiner äußeren Umrandung aufweist, insbesondere an einem Eckbereich (5) der Projektion.

3. Mobilteil nach mindestens einem der vorangegangenen Ansprüche,
**dadurch gekennzeichnet, dass**
das Modul (1) mit einem Gestell des Mobilteils schraubverbunden ist,
insbesondere wobei das Modul (1) mittels einer Steckverbindung elektrisch versorgt ist aus einem Energiespeicher des Mobilteils.

4. Mobilteil nach mindestens einem der vorangegangenen Ansprüche,
**dadurch gekennzeichnet, dass**
das Modul (1) an einem Außeneckbereich eines Gestells des Mobilteils angeordnet ist.

5. Mobilteil nach mindestens einem der vorangegangenen Ansprüche,
**dadurch gekennzeichnet, dass**
das Modul (1) als gerundeter Außeneckbereich der auf die Verfahrfläche senkrechten Projektion des Mobilteils samt Modul (1) fungiert.

6. Mobilteil nach mindestens einem der vorangegangenen Ansprüche,
**dadurch gekennzeichnet, dass**
zum Modul (1) identisch ausgebildete, weitere Module am Mobilteil angeordnet sind,
- welche jeweils an einem Außeneckbereich eines Gestells des Mobilteils angeordnet sind
- und/oder welche jeweils das Modul (1) als jeweiliger gerundeter Außeneckbereich der auf die Verfahrfläche senkrechten Projektion des Mobilteils samt Modul (1) fungieren.

7. Mobilteil nach Anspruch 6,
**dadurch gekennzeichnet, dass**
die weiteren Module derart angeordnet sind, dass das Mobilteil eine Rundumüberwachung aufweist

8. Mobilteil nach Anspruch 6 oder 7,
**dadurch gekennzeichnet, dass**
das oder jedes Modul (1) zumindest einen Radarsensor (2) aufweist,
insbesondere welcher einen jeweiligen Raumbereich überwacht und/oder mit welchem der Abstand von Objekten zum Radarsensor (2) bestimmbar ist.

9. Mobilteil nach Anspruch 8,
mittels der Radarsensoren (2) der bezogen auf einen im Mobilteil angeordnete Mittelpunkt gesamte Umfangswinkelbereich in einer zur Verfahrfläche parallelen Ebene überwachbar ist.

10. Mobilteil nach mindestens einem der vorangegangenen Ansprüche,
**dadurch gekennzeichnet, dass**
die konkaven Bereiche als Vertiefungen (4) an der Oberfläche des Moduls (1) ausgeführt sind,
insbesondere wobei die Vertiefungen (4) auf eine Ebene bezogen sind, welche parallel zur Verfahrfläche ausgerichtet ist.

11. Mobilteil nach mindestens einem der vorangegangenen Ansprüche,
**dadurch gekennzeichnet, dass**
das Gehäuse des Moduls (1) durchgehende Schlitze (6) aufweist,
insbesondere wobei die Schlitze (6) parallel zur Verfahrfläche ausgerichtet sind.

12. Mobilteil nach mindestens einem der vorangegangenen Ansprüche,
**dadurch gekennzeichnet, dass**
im vom Gehäuse des Moduls (1) umgegebenen Innenraumbereich des Moduls (1) ein weiteres Leuchtmittel (3) angeordnet ist,
insbesondere so, dass das vom weiteren Leuchtmittel (3) erzeugte Licht mittels der Schlitze (6) zur Verfahrfläche hingerichtet austritt.

13. Verfahren zum Betreiben eines Mobilteils nach mindestens einem der vorangegangenen Ansprüche,
insbesondere wobei das Leuchtmittel (3) mit einer Taktfrequenz angesteuert wird, die höher ist als 500 Hertz,
das Verfahren **dadurch gekennzeichnet, dass**
der Farbton, die Farbe und/oder eine Blinkfrequenz des von dem Leuchtmittel (3) des Mobilteils ausgestrahlten Lichtes in Abhängigkeit vom erfassten Abstand eines Objekts zum Mobilteil gesteuert wird,
insbesondere wobei die Blinkfrequenz kleiner als 10 Hertz ist,
insbesondere wobei die Taktfrequenz bei abnehmender Blinkfrequenz, insbesondere proportional, erhöht wird.

14. Verfahren nach Anspruch 13,
**dadurch gekennzeichnet, dass**
der Farbton von Rot über Orange und dann über Gelb nach Grün gesteuert wird, wenn der Abstand sich verringert von einem ersten Wert zu einem zweiten Wert,
und/oder dass
das Leuchtmittel (3) eine Anzahl von LEDs aufweist, wobei die Anzahl abhängig vom erfassten Abstand des Objekts gesteuert wird.

15. Anlage mit Verfahrfläche und Mobilteil nach einem der Ansprüche 1 bis 12,
**dadurch gekennzeichnet, dass**
die Verfahrfläche eine Ebene ist.

## Claims

1. A mobile part having at least one module (1),
wherein the mobile part is movable on a travel surface,
wherein the module (1) has a controllable lighting means (3), namely an LED strip,
wherein the lighting means (3) is arranged in elongated form along a plane curve,
wherein the lighting means (3) has LEDs arranged regularly spaced apart from one another along the curve,
wherein the surface of the module (1) has a convex region,
wherein the lighting means (3) is arranged on the surface of the module (1),
wherein the lighting means (3) is in elongated form along the plane curve, namely a line,
wherein the line is spaced apart in a parallel manner from the travel surface and/or from that plane which contains the rotational axes of wheels of the mobile part,
wherein the weight force of the mobile part and a load received by it is for the most part transferred to the travel surface via the wheels,
wherein a first region of the lighting means (3) is arranged in the convex region, **characterised in that**
the convex region is arranged between two concave regions spaced apart from one another, in particular depressions (4),
wherein a second region of the lighting means (3) is arranged in one of the concave regions,
wherein a third region of the lighting means (3) is arranged in another of the concave regions, so that the lighting means gives off light in as many angular directions as possible and in the process achieves the most uniform illumination possible in the entire circumferential angular region covered by it, wherein owing to the concave regions, the lighting means also gives off light into the spatial region, illuminated by the convex region, in a region spaced apart from the convex region.

2. A mobile part according to claim 1,
**characterised in that**
the module (1) is arranged on the mobile part, in particular screw-connected, in such a manner that the projection of the mobile part perpendicularly onto the travel surface has the module (1) at its outer edge, in particular at a corner region (5) of the projection.

3. A mobile part according to at least one of the preceding claims,
**characterised in that**
the module (1) is screw-connected to a frame of the mobile part,
in particular wherein the module (1) is supplied electrically from an energy storage device of the mobile part by means of a plug connection.

4. A mobile part according to at least one of the preceding claims,
**characterised in that**
the module (1) is arranged at an outer corner region of a frame of the mobile part.

5. A mobile part according to at least one of the preceding claims,
**characterised in that**
the module (1) functions as a rounded outer corner region of the perpendicular projection of the mobile part including module (1) onto the travel surface.

6. A mobile part according to at least one of the preceding claims,
**characterised in that** on the mobile part there are arranged further modules identical to the module (1),
- which are in each case arranged at an outer corner region of a frame of the mobile part
- and/or which in each case function as a respective rounded outer corner region of the perpendicular projection of the mobile part including module (1) onto the travel surface.

7. A mobile part according to claim 6,
**characterised in that**
the further modules are arranged in such a manner that the mobile part has all-round surveillance.

8. A mobile part according to claim 6 or 7,
**characterised in that**
the module (1), or each module (1), has at least one radar sensor (2),
in particular which monitors a respective spatial region and/or by means of which the distance of objects from the radar sensor (2) can be determined.

9. A mobile part according to claim 8,
by means of the radar sensors (2) there can be monitored the entire circumferential angular region, related to a centre point arranged in the mobile part, in a plane parallel to the travel surface.

10. A mobile part according to at least one of the preceding claims,
**characterised in that**
the concave regions are in the form of depressions (4) at the surface of the module (1),
in particular wherein the depressions (4) are related to a plane which is oriented parallel to the travel surface.

11. A mobile part according to at least one of the preceding claims,
**characterised in that**
the housing of the module (1) has through-passing slots (6),
in particular wherein the slots (6) are oriented parallel to the travel surface.

12. A mobile part according to at least one of the preceding claims,
**characterised in that**
a further lighting means (3) is arranged in the interior region, surrounded by the housing of the module (1), of the module (1),
in particular in such a manner that the light produced by the further lighting means (3) emerges by means of the slots (6) in a direction towards the travel surface.

13. A method of operating a mobile part according to at least one of the preceding claims,
in particular wherein the lighting means (3) is controlled using a clock frequency higher than 500 Hertz,
the method **characterised in that**
the shade, the colour and/or a flashing frequency of the light emitted by the lighting means (3) of the mobile part is controlled dependent on the determined distance of an object from the mobile part,
in particular wherein the flashing frequency is less than 10 Hertz,
in particular wherein when the flashing frequency decreases, the clock frequency is increased, in particular proportionally.

14. A method according to claim 13,
**characterised in that**
the shade is controlled from red via orange and then via yellow to green when the distance reduces from a first value to a second value,
and/or **in that**
the lighting means (3) has a number of LEDs, wherein the number is controlled dependent on the determined distance of the object.

15. An installation having a travel surface and a mobile part according to any one of claims 1 to 12,
**characterised in that**
the travel surface is a plane.

## Revendications

1. Unité mobile avec au moins un module (1),
l'unité mobile étant déplaçable sur une surface de déplacement,
le module (1) comportant une source lumineuse commandable (3), à savoir une bande de LED, la source lumineuse (3) étant agencée de manière allongée le long d'une courbe plane,
la source lumineuse (3) comportant des LED agencées régulièrement à distance les unes des autres le long de la courbe,
la surface du module (1) comportant une zone convexe,
la source lumineuse (3) étant agencée sur la surface du module (1),
la source lumineuse (3) étant réalisée de manière allongée le long de la courbe plane, à savoir une ligne,
la ligne étant orientée parallèlement à distance de la surface de déplacement et/ou de l'axe contenant les axes de rotation des roues de l'unité mobile,
la force de gravité de l'unité mobile et d'une charge prise par celle-ci étant transmise pour la plus grande partie via les roues à la surface de déplacement,
une première zone de la source lumineuse (3) étant agencée dans la zone convexe,
**caractérisé en ce que** la zone convexe est agencée entre deux zones concaves à distance l'une de l'autre, en particulier des cavités (4),
une deuxième zone de la source lumineuse (3) étant agencée dans l'une des zones concaves,
une troisième zone de la source lumineuse (3) étant agencée dans une autre des zones concaves, de sorte que la source lumineuse éclaire dans le plus grand nombre possible de directions angulaires et assure ainsi un éclairage aussi homogène que possible dans toute la zone angulaire qu'elle couvre, la source lumineuse éclairant également, grâce aux zones concaves, la partie de l'espace éclairée par la zone convexe, même dans une zone située à distance de cette dernière.

2. Unité mobile selon la revendication 1, **caractérisée en ce que** le module (1) est agencé sur l'unité mobile, notamment vissé, de sorte que la projection de l'unité mobile réalisée perpendiculairement à la surface de déplacement comporte le module (1) sur son pourtour extérieur, notamment sur une zone d'angle (5) de la projection.

3. Unité mobile selon au moins une des revendications précédentes, **caractérisée en ce que** le module (1) est vissé à un châssis de l'unité mobile, notamment le module (1) étant alimenté électriquement par une connexion enfichable à partir d'un accumulateur d'énergie de l'unité mobile.

4. Unité mobile selon au moins une des revendications précédentes, **caractérisée en ce que** le module (1) est agencé sur une zone d'angle extérieur d'un châssis de l'unité mobile.

5. Unité mobile selon au moins une des revendications précédentes, **caractérisée en ce que** le module (1) fait office de zone d'angle extérieur arrondie de la projection perpendiculaire à la surface de déplacement de l'unité mobile avec module (1).

6. Unité mobile selon au moins une des revendications précédentes, **caractérisée en ce que** des modules supplémentaires, identiques au module (1), sont agencés sur l'unité mobile,
- chacun étant agencé sur une zone d'angle extérieur d'un châssis de l'unité mobile
- et/ou chacun faisant office de module (1) en tant que zone d'angle extérieur arrondie respective de la projection perpendiculaire à la surface de déplacement de l'unité mobile avec module (1).

7. Unité mobile selon la revendication 6, **caractérisée en ce que** les modules supplémentaires sont agencés de sorte que l'unité mobile comporte une surveillance périphérique

8. Unité mobile selon la revendication 6 ou 7, **caractérisée en ce que** le ou chaque module (1) comporte au moins un capteur radar (2), notamment lequel surveille une zone spatiale respective et/ou avec lequel la distance d'objets au capteur radar (2) peut être déterminée.

9. Unité mobile selon la revendication 8, les capteurs radar (2) permettant de surveiller toute la plage d'enroulement périphérique dans un plan parallèle à la surface de déplacement, par rapport à un centre agencé dans l'unité mobile.

10. Unité mobile selon au moins une des revendications précédentes, **caractérisée en ce que** les zones concaves sont réalisées comme cavités (4) sur la surface du module (1), notamment les cavités (4) étant orientées par rapport à un plan parallèle à la surface de déplacement.

11. Unité mobile selon au moins une des revendications précédentes, **caractérisée en ce que** le boîtier du module (1) comporte des fentes (6) traversantes, notamment les fentes (6) étant orientées parallèlement à la surface de déplacement.

12. Unité mobile selon au moins une des revendications précédentes, **caractérisée en ce que** dans la zone intérieure entourée par le boîtier du module (1), une autre source lumineuse (3) est agencée, notamment de sorte que la lumière générée par l'autre source lumineuse (3) sort dirigée vers la surface de déplacement via les fentes (6).

13. Procédé pour exploiter une unité mobile selon au moins une des revendications précédentes, notamment la source lumineuse (3) étant commandée avec une fréquence de commande supérieure à 500 Hertz,
le procédé étant **caractérisé en ce que** la teinte, la couleur et/ou une fréquence de clignotement de la lumière émise par la source lumineuse (3) de l'unité mobile est commandée en fonction de la distance détectée d'un objet à l'unité mobile,
notamment la fréquence de clignotement étant inférieure à 10 Hertz,
notamment la fréquence de commande étant augmentée, en particulier proportionnellement, lorsque la fréquence de clignotement diminue.

14. Procédé selon la revendication 13, **caractérisé en ce que** la teinte est commandée de rouge à orange puis à jaune vers vert lorsque la distance diminue d'une première valeur à une deuxième valeur, et/ou la source lumineuse (3) comporte un nombre de LED, le nombre étant commandé en fonction de la distance détectée de l'objet.

15. Installation avec surface de déplacement et unité mobile selon l'une des revendications 1 à 12, **caractérisée en ce que** la surface de déplacement est un plan.
